# EUROPEAN PATENT SPECIFICATION

(11) **EP 0 308 829 B1**
(45) Date of publication and mention of the grant of the patent: **03.08.1994**
(21) Application number: 88115245.8
(22) Date of filing: 16.09.1988
(51) Int. Cl.: F16F 15/12

(54) **Torque variation absorbing device**
Torsionsschwingungsdämpfer
Amortisseur d'oscillations de torsion

(30) Priority: 19.09.1987 JP 142295/87 U
(43) Date of publication of application: 29.03.1989
(73) Proprietor: AISIN SEIKI KABUSHIKI KAISHA, Kariya City Aichi Pref. (JP)
(72) Inventor: Kobayashi, Kiyonori, Chiryu city Aichi Pref. (JP); Kamiya, Masakazu, Toyoake city Aichi Pref. (JP); Kagiyama, Junji, Kariya city Aichi Pref. (JP)
(74) Representative: Grams, Klaus Dieter, Dipl.-Ing.

(56) References cited:
- EP-A- 0 170 950
- FR-A- 2 579 709
- FR-A- 2 618 200
- GB-A- 2 157 801
- GB-A- 2 168 784
- US-A- 4 663 983

## Description

This invention relates to a torque variation absorbing device according to the preamble of claim 1. This device is used to take up and compensate for variations in torque fluctuations. The torque variation absorbing device is installed on or connected to a crankshaft of an internal combustion engine to take up and compensate torque fluctuations produced by operation of the internal combustion engine.

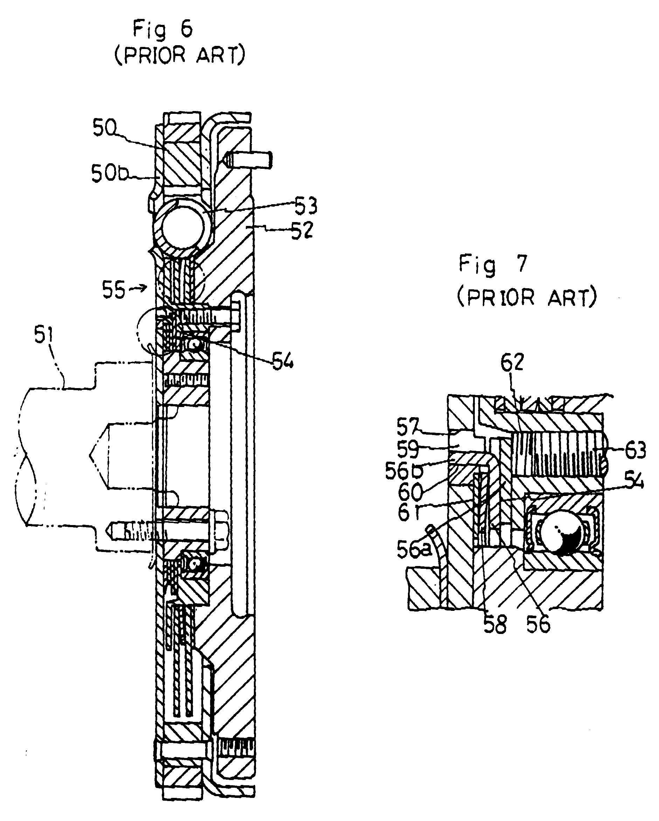

According to the document US-A-4 663 983 there is disclosed a generic conventional torque variation absorbing device. As shown in Fig. 6 and Fig. 7, the conventional device includes a driving plate 50 of a driving side flywheel attached or connected to an output shaft of an engine crankshaft 51 and a driven side flywheel 52 which is located close to the driving plate 50.

As seen from Fig. 6 a spring mechanism 53 and a hysteresis mechanism 54 are located or positioned between the driving plate 50 and the driven side flywheel 52. A damping and a torque limiting mechanism 55 is located radially inside of the spring mechanism 53. In the conventional device, the rotation of the engine crankshaft 51 and the torque fluctuation are transmitted to the driven side flywheel 52 through the driving plate 50, the spring mechanism 53 and the hysteresis mechanism 54, which comprise the torque variation absorbing device. Thus, the torque variation is absorbed by the variation absorbing device.

The hysteresis mechanism 54 is located further radially inside of the torque limiting mechanism 55 and between a side plate 50b of the driving plate 50 and the flywheel 52. Fig. 7 illustrates the hysteresis mechanism 54. As seen from Fig. 7, in the hysteresis mechanism 54, a thrust plate 56 provided with a friction lining or friction plate 56a of abrasive material is partially bent and formed into a bent portion 56b. The bent portion 56b is fitted into a hole 57 bored in the side plate 50b of the driving plate 50, thereby fixing circumferentially the thrust plate 56 to the driving plate 50. A cup 59 is fitted into the hole 57 of a side plate 50b. Likewise, the bent portion 56b of the thrust plate 56 is fitted into a hole 60 of the cap 59. A cone spring 58 and a ring 61 are installed between the thrust plate 56 and the side plate 50b. The ring 61 is installed between the cone spring 58 and the side plate 50b, thereby pressing the thrust plate 56 between the friction plate 56a and the driven side flywheel 52 and producing a hysteresis.

A bolt hole 62 extends through a driven plate of the driven side flywheel 52 to the plane where the hysteresis mechanism slides against the driven plate and opens to the part where the hysteresis mechanism is located. Due to this arrangement, the abraded dust of the friction plate 56a generated through the sliding friction is discharged into the bolt hole 62. In this manner, any abraded dust developed in the hysteresis mechanism can well be absorbed.

The object of the present invention is to provide a torque variation absorbing device, the hysteresis character of which is stabilized.

This object is achieved by the features defined in the characterizing part of claim 1. According to these features, there is provided a clearance for the discharging abraded dust by centrifugal force from the friction plate between the steel side blade and the inner body, wherein the friction plate is urged via the thrust plate and the cone spring against the steel side plate, a portion of the hysteresis mechanism is opposite the clearance and the thrust plate is fixed fast in rotation to the inner body of the driven flywheel. Due to this construction, the friction plate provides a constant frictional force, the hysteresis character is stabilized and becomes nearly constant with respect to the operation time.

Preferable embodiments of the invention are defined in the claims 2 and 3.

In the following the invention is further illustrated by embodiments with reference to the enclosed figures.
FIGURE 1 is an elevational view but is partly shown in section, of a torque variation absorbing device embodying the invention;
FIGURE 2 is a sectional view taken substantially along the lines II-II of the FIGURE 1;
FIGURE 3 is a grossly enlarged selectional view of a hysteresis mechanism of the invention;
FIGURE 4 is a sectional view showing the another embodiment of the invention;
FIGURE 5 is a graph relationship between the continuous running time of the device and coefficient of the friction plate;
FIGURE 6 is a sectional view of the conventional device and corresponds to Fig. 2; and
FIGURE 7 shows an enlarged sectional view of a hysteresis mechanism of the prior art of the invention.

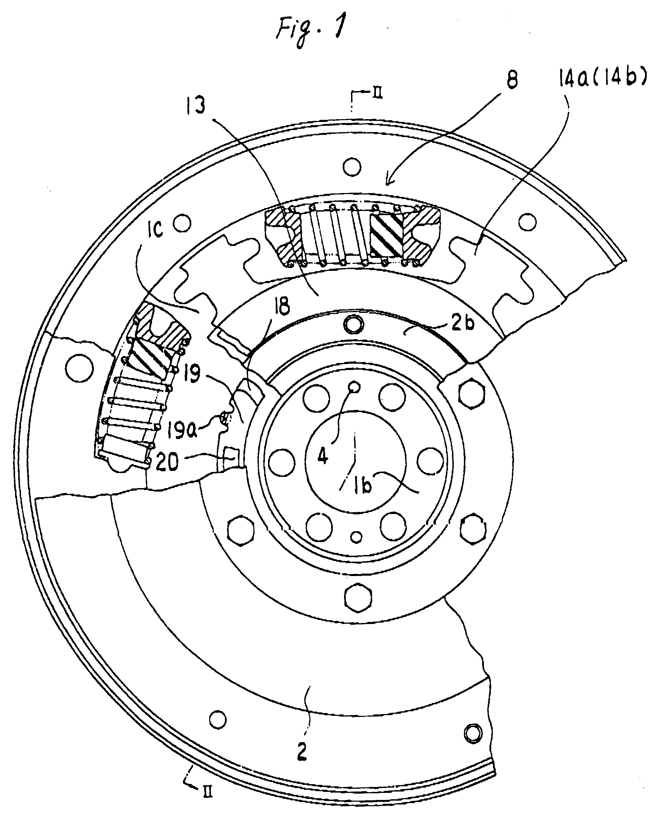

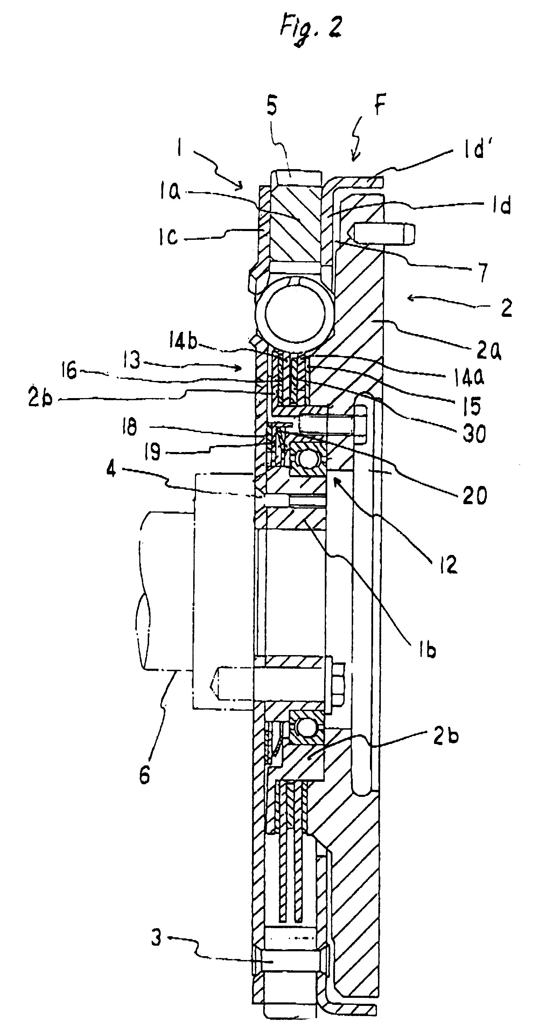

Referring first to FIGURES 1 and 2 of the drawings, a torque variation absorbing device includes a flywheel F. The flywheel F is divided into a driving side flywheel 1 and a driven side flywheel 2. The driving side flywheel 1 comprises an outer body 1a shaped like a ring, an inner body shaped like a ring 1b and steel side plates 1c and 1d which clump the bodies 1a and 1b from both sides by a rivet 3 and a screw 4. The driven side flywheel 2 comprises an inertia body 2a shaped like a disk and an inner body 2b shaped like a ring. On an periphery of the body 1a there is press-fitted or shrink-fitted a ring gear 5 for accommodating the starting of an engine. The driving side flywheel 1 is connected to a driving shaft of an engine crankshaft 6, and the body 1a and the side plates 1c and 1d are rotated together with the crankshaft 6.

The side plate 1d which constitutes one part of the driving side flywheel 1 and which is located close to the driven side flywheel 2 has at its periphery portion 1d which is bent in to L-letter fashion to surround an outer periphery of the driven side flywheel 2. The bent portion 1d' covers a gap 7 extending straightly in the radial direction between the outer body 1a and the inertia body 2a of the driven side flywheel 2.

A spring mechanism 8 is provided between the driving side flywheel 1 and the driven side flywheel 2. The spring mechanism 8 comprises a coil spring 9 and a plurality of spring seats 10. One of the spring seat 10 of the spring mechanism 8, an elastic rubber 11 is secured to the spring seats 10. A bearing means 12 is provided between the driving side flywheel 1 and the driven side flywheel 2. Both of them are rotatably supported.

A torque limiting mechanism 13 is arranged between the inertia body 2a and an inner body 2b of the driven side flywheel 2. The torque limiting mechanism 13 includes a plurality of driven disks 14a and 14b. A cone spring 30 is arranged between the plurality of the driven disks 14a and 14b. A friction plate 15 is arranged between the driven plate 14a and the inertia body 2a. Similarly, a friction plate 16 is arranged between the driven disk 14b and the inner body 2a.

A hysteresis mechanism 17 is arranged radially inwardly of the torque limiting mechanism 13. The hysteresis mechanism 17 comprises a friction plate 18, a thrust plate 19 and a cone spring 20. The cone spring 20 is positioned between the inner body 2b and the thrust plate 19, and the friction plate 18 is positioned between the thrust plate 19 and the steel side plate 1c of the driving side flywheel 1.

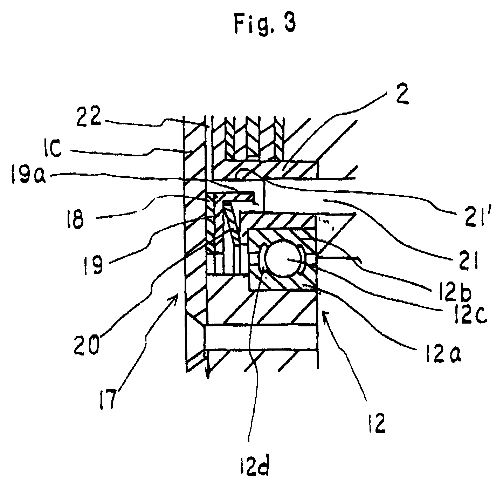

Fig. 3 illustrates an expanded sectional view of the hysteresis mechanism 17. As seen from Fig. 3, in the hysteresis mechanism 17, the thrust plate 19 is provided with the friction plate 18 of abrasive material is partially bent so as to form a bent portion 19a which is fitted into a bolt hole 21 of the inner body 2a. The bearing means 12 includes an inner bearing race 12a, an outer bearing race 12b, a ball bearing 12c and a bearing seal 12d. A bolt 21 extends through the inner body 2b. The friction plate 18 is slidably connected between the thrust plate 19 and the steel side plate 1c. The cone spring 20 gives a tension against the thrust plate 19 and the friction plate 18.

During the operation of this device, the abraded dust is generated in the hysteresis mechanism 17. The abraded dust will be discharged through a clearance 22. The grease is enclosed in the bearing means 12. In the prior device, the friction plate 56a of the hysteresis mechanism is located in front of the bolt hole 62. When the bearing means 12 is broken, the enclosed grease leaks from the bearing means 12. Due to such leakage, frictional force between the hysteresis plate 56 and the friction lining 56a can not offer a stabilized frictional force. In consequence of decreasing the coefficient of friction, a resonate will be occur during the operation of this device. In the present invention, the friction plate 18 of the hysteresis mechanism is positioned between the steel side plate 1c and the thrust plate 19. If the grease leaks from the bearing means 12, an effect of the leaked grease can be eliminated in this device.

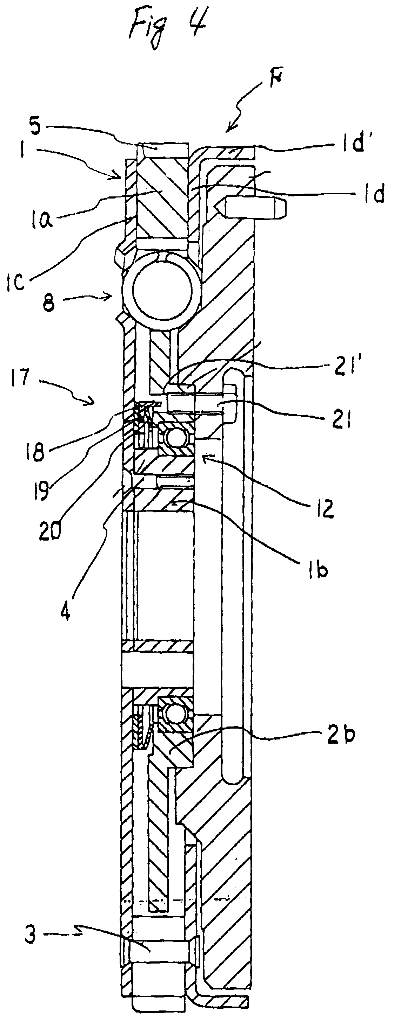

Fig. 4 illustrates another embodiment of this invention. In this embodiment of the torque limiting mechanism is not provided. Without the torque variation limiting mechanism, the same function can be obtained easily similar to the above-mentioned embodiment.

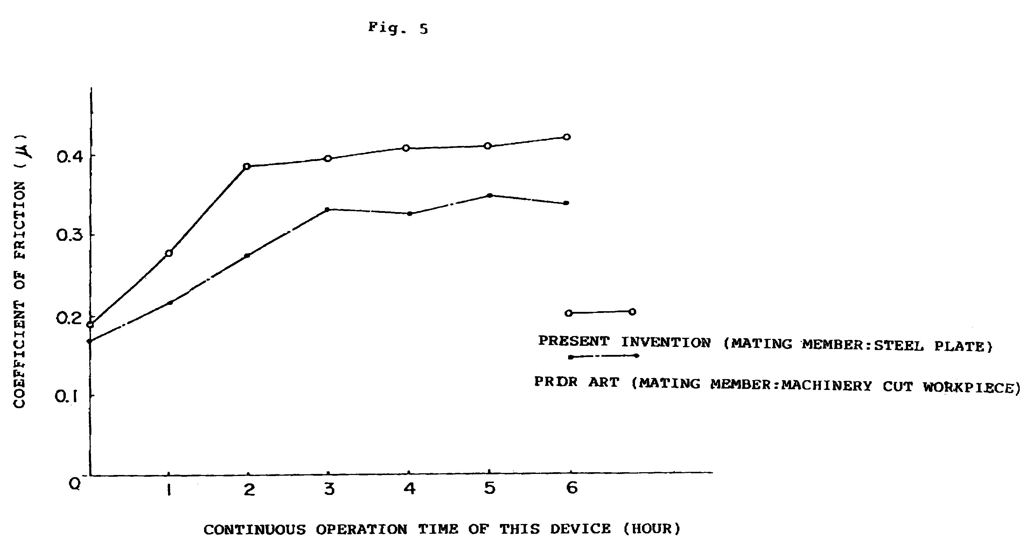

Fig. 5 shows relationship between the time required since the device is started and the coefficient of friction. As time elapses, the coefficient of the friction plate can be produced into stable coefficient.

As understood from the above, in the present invention, the bolt hole is provided through which the bolt is passed so as to fasten together the driving side flywheel and the driven side flywheel. Since the bolt hole extends in to the hysteresis mechanism, the abraded dust of the friction may be lining excluded through the clearance.

Other benefits derived from the present invention come from fabrication of the member of the hysteresis mechanism mainly with polyamide resin and they include an enhanced effect of vibration absorbing on account of a high coefficient of friction, an increased durability on account of good anti-wear property and a stabilized performance on account of a small change in the coefficient of friction.

## Claims

1. A torque variation absorbing device comprising:
a driving side flywheel (1) connected to an engine crankshaft (6) and a driven side flywheel (2), whereby between said driving side flywheel (1) and said driven side flywheel (2) a bearing means (12) is provided,
a spring mechanism (8) transferring torque between said driving side flywheel (1) and said driven side flywheel (2) and
a hysteresis mechanism (17) comprising a friction plate (18), a cone spring (20) and a thrust plate (19) located therebetween, wherein said friction plate (18), cone spring (20) and thrust plate (19) are positioned radially inward of said spring mechanism and adjacent to said bearing means (12) between a portion of an inner body (2b) of said driven side flywheel (2) and a steel side plate (1c) of said driving side flywheel (1),
**characterized in that**
inbetween said steel side plate (1c) and said inner body (2b) a clearance (22) for discharging abraded dust by centrifugal force from the friction plate (18) is provided,
said friction plate (18) is urged via said thrust plate (19) and said cone spring (20) against the steel side plate (1c) and that a portion of said hysteresis mechanism (17) is opposite to said clearance (22) and that
said thrust plate (19) is fixed fast in rotation to said inner body (2b) of the driven flywheel (2).

2. A torque variation absorbing device according to claim 1, **characterized in that** an outer circumferential part of said cone spring (20) contacts said thrust plate (19).

3. A torque variation absorbing device according to claim 1 or 2, **characterized in that** said thrust plate (19) engages with said inner body (2b) by a bent portion (19a) extending into a bolt hole (21) of said inner body (2b).

## Patentansprüche

1. Torsionsschwingungsdämpfer, der aufweist:
ein Schwungrad (1) an der treibenden Seite, das mit einer Motor-Kurbelwelle (6) verbunden ist, und ein Schwungrad (2) an der getriebenen Seite, wobei eine Lagereinrichtung (12) zwischen dem Schwungrad (1) an der treibenden Seite und dem Schwungrad (2) an der getriebenen Seite vorgesehen ist,
einen Federmechanismus (8), der eine Torsion zwischen dem Schwungrad (1) an der treibenden Seite und dem Schwungrad (2) an der getriebenen Seite überträgt, und
einen Hysteresemechanismus (17), der eine Reibungsplatte (18), eine Kegelfeder (20) und eine Druckplatte (19) aufweist, die sich zwischen diesen befindet, wobei sich die Reibungsplatte (18), die Kegelfeder (20) und die Druckplatte (19) in Radialrichtung innerhalb vom Federmechanismus und benachbart zur Lagereinrichtung (12) zwischen einem Abschnitt eines inneren Körpers (2b) des Schwungrads (2) an der getriebenen Seite und einer Stahl-Seitenplatte (1c) des Schwungrads (1) an der treibenden Seite befinden,
dadurch gekennzeichnet, daß
zwischen der Stahl-Seitenplatte (1c) und dem inneren Körper (2b) ein Zwischenraum (22) vorgesehen ist, um abgetragenen Staub durch Zentrifugalkraft von der Reibungsplatte (18) abzugeben,
die Reibungsplatte (18) über die Druckplatte (19) und die Kegelfeder (20) gegen die Stahl-Seitenplatte (1c) gedrückt wird und daß ein Abschnitt des Hysteresemechanismus (17) dem Zwischenraum (22) gegenüberliegt, und daß
die Druckplatte (19) am inneren Körper (2b) des getriebenen Schwungrads (2) bei Drehung starr befestigt ist.

2. Torsionsschwingungsdämpfer nach Anspruch 1, dadurch gekennzeichnet, daß
ein äußerer Umfangsabschnitt der Kegelfeder (20) die Druckplatte (19) berührt.

3. Torsionsschwingungsdämpfer nach Anspruch 1 oder 2, dadurch gekennzeichnet, daß
die Druckplatte (19) mit dem inneren Körper (2b) durch einen gebogenen Abschnitt (19a) in Eingriff steht, der sich in ein Bolzenloch (21) des inneren Körpers (2b) erstreckt.

## Revendications

1. Amortisseur d'oscillations de torsion comprenant :
un volant menant (1) relié à un vilebrequin de moteur (6) et à un volant mené (2), dans lequel est constitué un moyen de palier (12) formé entre ledit volant menant (1) et ledit volant mené (2),
un mécanisme de ressort (8) destiné à transférer la torsion entre ledit volant menant (1) et ledit volant mené (2), et
un mécanisme d'hystérésis (17) constitué d'une plaque de friction (18), un ressort conique (20) et une plaque de poussée (19) qui est située entre ceux-ci, dans lequel lesdits plaque de friction (18), ressort conique (20) et plaque de poussée (19) sont positionnés dans le sens radial à l'intérieur dudit mécanisme de ressort pour être adjacents audit moyen de palier (12) entre une partie de corps interne (2b) dudit volant mené (2) et une plaque latérale en acier (1c) dudit volant menant (1),
caractérisé en ce que
dans l'intervalle séparant la plaque latérale en acier (1c) dudit corps interne (2b) est ménagé un débattement (22) destiné à évacuer la poussière abrasée par la force centrifuge provenant de la plaque de friction (18),
ladite plaque de friction (18) étant placée via ladite plaque de poussée (19) et ledit ressort conique (20) contre la plaque latérale en acier (1c) et en ce qu'une partie dudit mécanisme d'hystérésis (17) est disposée en regard dudit débattement (22) et en ce que
ladite plaque de poussée (19) est fermement fixée en rotation sur ledit corps interne (2b) du volant mené (2).

2. Amortisseur d'oscillations de torsion selon la revendication 1, caractérisé en ce qu'une partie circonférentielle extérieure dudit ressort conique (20) vient au contact de ladite plaque de poussée (19).

3. Amortisseur d'oscillations de torsion selon la revendication 1 ou 2, caractérisé en ce que ladite plaque de poussée (19) s'engage avec ledit corps interne (2b) par une partie courbe (19a) qui s'étend dans un trou à boulon (21) dudit corps interne (2b).
